# EUROPEAN PATENT SPECIFICATION

(11) **EP 0 609 387 B1**
(45) Date of publication and mention of the grant of the patent: **07.04.1999**
(21) Application number: 92923511.7
(22) Date of filing: 23.10.1992
(51) Int. Cl.: C08L 83/04, C08F 283/12, C08G 77/06

(54) **GLOVES HAVING A TEXTURED OUTER SURFACE**
HANDSCHUHE MIT TEXTURIERTER ÄUSSERER OBERFLÄCHE
GANTS AYANT UNE SURFACE EXTERIEURE TEXTUREE

(30) Priority: 25.10.1991 US 794292
(43) Date of publication of application: 10.08.1994
(73) Proprietor: NUSIL TECHNOLOGIES, Carpinteria, CA 93013 (US)
(72) Inventor: NASH, Brian, Carpinteria, CA 93013 (US)
(74) Representative: Lehmann, Klaus, Dipl.-Ing.
(86) International application number: US9209039
(87) International publication number: WO9308236

(56) References cited:
- EP-A- 0 238 876
- WO-A-84/00556
- WO-A-92/13497
- US-A- 4 061 709
- US-A- 4 087 399
- US-A- 4 143 109
- US-A- 4 297 265
- US-A- 4 560 711
- US-A- 4 569 980
- US-A- 4 950 502

## Description

This invention relates to a surgical glove having a textured outer surface.

As is well known in the art, silicone articles may be formed by dipping or otherwise depositing a dispersion of silicone on an appropriate form. The dispersion may also contain a vulcanizing agent along with accelerators and other additives. After each layer of dispersion is deposited on the form, the layer is permitted to cure and the process is repeated until the outer shell of the article reaches the required thickness.

A smooth untreated elastomer surface has the physical characteristic of blocking; that is, the characteristic of sticking to itself and other surfaces. For some applications blocking is undesirable. For example, blocking is undesirable in latex, silicone and other elastomer gloves because it makes them difficult to don. Various lubricants and release agents have been dusted or otherwise applied to gloves to improve performance and overcome blocking. The shedding of these lubricants can cause undesirable side-effects, such as contamination, infection and foreign body reactions due to powders from gloves entering the wound during surgical procedures. As a result, much of the early work on textured surfaces was performed on latex surgical gloves. U.S. Patent No. 3,761,965, discloses a sanitary glove having a textured surface provided by a granular vinyl chloride polymer imbedded on the surface of the film from which the glove is manufactured. This glove is suitable for donning without the use of a lubricant such as powder. However, this type of glove has the same type of problem as talc-dusted gloves in that particulates may enter a wound causing an adverse foreign body reaction. Dusted gloves are, therefore, not generally suitable for surgical procedures.

U.S. Patent No. 1,983,963 discloses a method of providing a textured surface on a rubber glove which subjects the vulcanized surface of the glove to the action of a rubber solvent or swelling agent such as naphtha, benzol, or gasoline either by immersion of by subjecting the surfaces to the fumes of these chemicals. This process, which is similar to etching, has not enjoyed widespread use and is not adaptable to silicone.

U.S. Patent No. 4,143,109, issued to Stockum, describes a method of dip-coating a first layer of natural rubber latex onto a glove form, the form having the general contour of a human hand, followed by dip-coating a second layer containing particulates which are randomly distributed throughout dispersion. After curing, the glove is inverted and may be donned without the use of lubricants. The general method developed by Stockum for latex articles haas not been transferrable to silicone articles because the particulates taught by Stockum for use with latex would weaken the outermost layers of silicone substantially.

The foregoing inventions have been developed for latex articles. U.S. Patent no. 4,061,709 to Miller, et al., describes a method for manufacturing silicone rubber gloves with a non-blocking surface by repeatedly dipping a form in a solvent dispersion of uncured silicone rubber to build up a plurality of layers and then forming a layer of liquid droplets on the surface of the article thereby forming an irregular or textured surface as the solvent evaporates. Utilization of this method for physically altering the exterior uniformly from lot to lot requires a highly controlled manufacturing environment which is difficult and expensive to maintain. The present invention utilizes a unique dispersion which produces a uniformly textured, non-blocking surface.

U.S. Patent Number 4,569,980 discloses a releasable film forming composition comprising an organopolysiloxane having hydroxyl groups at the ends of the molecular chain, a finely divided silica, a phenyl-containing organosilane or organopolysiloxane, an organohydrogenpolysiloxane containing at least three SiH groups per molecule, a metallic salt of an organic acid and an organic solvent, and a process for preparing same, as well as a releasable film forming composition comprising an organopolysiloxane containig at least two silicone atom-bonded alkenyl groups per molecule, a finely divided silica, a phenyl-containing organosilane or organopolysiloxane, an organohydrogenpolysiloxane containing at least two SiH groups per molecule, a platinic compound and an organic solvent, and a process for preparing same.

There are other areas where a non-organic, noncontaminating, non-blocking, non-allergenic, texturized surface with low reflectivity and high diffusivity would be highly advantageous. Some space applications demand low reflectivity or high diffusivity in paints and coatings. Epoxies, and almost all organic coatings other than silicone, are not durable enough to withstand the highly oxidizing atmospheres that satellites must endure. For example, an anti-blocking silicone surface is necessary in a bellows or in rolled solar array to facilitate separation of adjacent surfaces during deployment. Until now, prior art silicone technology has not been able to produce contaminant-free silicone anti-blocking, low reflectivity, high diffusivity outer layers which are sufficiently durable to withstand the physical and chemical properties of these extreme environments.

The invention contemplates a surgical glove having a textured outer surface obtained by the following steps: a) providing a one or two part dispersion of silicone elastomer in an organic solvent by adding hydrophilic silica to a dispersion of silicone elastomer in the organic solvent, which hydrophilic silica has a particle size from 2 to 10 µm, a specific surface area of from 75 to 200 m²/g and density such that the particles float in the elastomer and thereby migrate to the surface, b) providing a coating of the dispersion obtained in step a) onto the outer surface of a surgical glove and c) curing the coating to obtain a surgical glove having a textured outer surface.

It is yet another object of this invention to provide a surgical glove characterized in that said silicone elastomer is a copolymer comprising dimethyl polysiloxane.

It is still a further object of the invention to provide a surgical glove characterized in that said elastomer is a copolymer comprising dimethyl diphenyl polysiloxane.

This invention teaches the addition of hydrophilic silica preferably in the size range of 2-10 microns, to elastomer dispersion to provide a textured non-blocking silicone surface coating on gloves dipped therein. Dipping articles in elastomer dispersions is well known in the art of applying elastomer coatings. Suitable silicone dispersions for applying smooth, non-textured coatings to articles are also well known in the art. What has been unknown in the art until the invention thereof by the present inventor is the addition of hydrophilic silica to a silicone dispersion to render a textured surface to gloves coated therewith.

The addition of colloidal silica to elastomer dispersions is also well known in the art. The function of added colloidal silica is to strengthen the elastomer upon curing. Colloidal silica, which is hydrophobic (organophilic), is obtained by the surface treatment of silica with organic moieties to generate a particulate species capable of colloidal dispersion. While the addition of colloidal silica to a silicone dispersion strengthens the resultant elastomer layer, the dispersion is inoperative for providing a textured surface to a glove coated therewith. Surprisingly, adding hydrophilic silica in the size range 2-10 microns, to a dispersion does provide a textured surface to a glove coated therewith. Colloidal silica is too dense for the particles to "float" to the surface while the layer is curing. It is important that the silica particles have a specific surface area as defined above and a density such that the hydrophilic silica particles "float" in an elastomer dispersion thereby migrating to the surface of a layer coated with such dispersion.

### Example 1: FIRST PREFERRED EMBODIMENT

The present invention is directed to the task of improving the surface morphology of gloves, including silicone gloves, to provide a textured surface which has a lower coefficient of friction than a smooth surface and which is suitable for coating articles such as surgical gloves which presently require lubricants to enable donning.

In accordance with the invention, the surface morphology of gloves is substantially improved by bonding to the surface a silicone coating comprising the reaction product of a composition comprising: (1) at least one crosslinkable polysiloxane; (2) silica filler; (3) crosslinking catalyst; (4) a crosslinking agent. The coating may be applied to the surface from a liquid vehicle, preferably a volatile organic solvent, followed by heating to drive off the organic solvent or other liquid vehicle and to effect crosslinking. The manner of application, whether by dipping, flowing, spraying, etc. is a matter of individual choice and per se comprises no part of this invention.

An example of a two-part silicone dispersion which, when combined and applied to the surface of a glove, and allowed to cure, produces a durable textured, non-blocking surface on said glove, is as follows:

| | Part A | Part B |
|---|---|---|
| | % by weight | % by weight |
| Trifluoropropyl methyl polysiloxane | 0 - 100% | 0 - 100% |
| Dimethyl polysiloxane | 0 - 100% | 9 - 100% |
| Dimethyl diphenyl polysiloxane | 0 - 30% | 30 - 0% |
| Catalyst | 0 - 20 ppm | -0- |
| X linker | -0- | 0 - 10% |
| Hydrophilic silica | 1 - 20% | 1 - 20% |
| Reinforcing silica | 0 - 40% | 0 - 40% |

The coating composition of this invention is readily prepared by mixing the ingredients under ambient temperature and pressure. The surface may then be coated by per se known techniques, dipping in the coating solution being more efficacious.

Crosslinking, as well as solvent removal, is effected by heating at a temperature and for a time to effect complete cure as well as solvent removal. Since there is a time-temperature relationship to effect cure, the time and temperature are not susceptible to precise quantitative statements. On a bench scale, heating at about 150°C for about 30 minutes is effective.

### Example 2: SECOND PREFERRED EMBODIMENT

A second system which is suitable for using as a final coat dispersion for producing textured surfaces on silicone and non-silicone gloves is a one-part system similar to the two-part system described in Example 1. The one-part system utilizes, for example, dimethyl polysiloxane (0-100%), Dimethyl diphenyl polysiloxane (30-0%), hydrophilic silica having a specific surface area between 75-200 square meters per gram (0-20%) , tris (methylethyl ketoximo) methylsilane (<10%) and a catalyst (organotin complex) in naphtha. Before the above dispersion is suitable for a final application, the percentage of texturing silica (e.g. Degussa TS-100) must be adjusted to fall within the range of about 0-20% by solids weight. Solvent for the final dilution runs from 0-70% by solids weight.

## Claims

1. A surgical glove having a textured outer surface obtained by the following steps:
a) providing a one or two part dispersion of silicone elastomer in an organic solvent by adding hydrophilic silica to a dispersion of silicone elastomer in the organic solvent, which hydrophilic silica has a particle size from 2 to 10 µm, a specific surface area of from 75 to 200 m²/g and density such that the particles float in the elastomer and thereby migrate to the surface,
b) providing a coating of the dispersion obtained in step a) onto the outer surface of a surgical glove and
c) curing the coating to obtain a surgical glove having a textured outer surface.

2. A surgical glove according to claim 1, characterized in that said silicone elastomer is a copolymer comprising dimethyl polysiloxane.

3. A surgical glove according to claim 1, characterized in that said elastomer is a copolymer comprising dimethyl diphenyl polysiloxane.

## Patentansprüche

1. Chirurgischer Handschuh mit texturierter äußerer Oberfläche, hergestellt nach folgenden Schritten:
a) Herstellen einer ein- oder zweiteiligen Dispersion eines Silikonelastomers in einer organischen Lösung durch Zufügen eines hydrophilen Silikates in eine Dispersion aus Silikonelastomer in der organischen Lösung, wobei das hydrophile Silikat eine Teilchengröße von 2 bis 10 µm, eine spezifische Oberfläche von 75 bis 200 m²/g und eine solche Dichte aufweist, daß die Teilchen im Elastomer schwimmen und dadurch zur Oberfläche wandern,
b) Aufbringen einer Beschichtung der in Schritt a) hergestellten Dispersion auf die äußere Oberfläche eines chirurgischen Handschuhs, und
c) Aushärten der Beschichtung, um einen chirurgischen Handschuh mit einer texturierten äußeren Oberfläche zu schaffen.

2. Chirurgischer Handschuh nach Anspruch 1, **dadurch gekennzeichnet,** daß das Silikonelastomer ein Copolymer ist, das Dimethylpolysiloxan enthält.

3. Chirurgischer Handschuh nach Anspruch 1, **dadurch gekennzeichnet**, daß das Elastomer ein Copolymer ist, das Dimethyldiphenylpolysiloxan enthält.

## Revendications

1. Gant chirurgical présentant une surface extérieure texturée obtenue par les étapes suivantes :
a) préparer une dispersion en une ou deux parts d'élastomère silicone dans un solvant organique par l'adjonction de silice hydrophile à une dispersion d'élastomère silicone dans le solvant organique, ladite silice hydrophile présentant une taille de particule de 2 à 10 µm, une superficie spécifique allant de 75 à 200 m²/g et une densité telle que les particules flottent dans l'élastomère et migrent de la sorte vers la surface,
b) appliquer un enduit de la dispersion obtenue dans l'étape a) sur la surface extérieure d'un gant chirurgical et
c) sécher l'enduit pour obtenir un gant chirurgical présentant une surface extérieure texturée.

2. Gant chirurgical selon la revendication 1, caractérisé en ce que ledit élastomère silicone est un copolymère comportant du diméthyle polysiloxane.

3. Gant chirurgical selon la revendication 1, caractérisé en ce que ledit élastomère est un copolymère comportant du diméthyle diphényle polysiloxane.
